# EUROPÄISCHE PATENTSCHRIFT

(11) **EP 4 640 447 B1**
(45) Veröffentlichungstag und Bekanntmachung des Hinweises auf die Patenterteilung: **09.12.2026**
(21) Anmeldenummer: 25168749.7
(22) Anmeldetag: 07.04.2025
(51) Int. Cl.: B60C 11/04, B60C 11/12, B60C 11/03

(54) **FAHRZEUGREIFEN**
VEHICLE TYRE
BANDAGE PNEUMATIQUE POUR VÉHICULES

(30) Priorität: 24.04.2024 DE 102024203832
(43) Veröffentlichungstag der Anmeldung: 29.10.2025
(73) Patentinhaber: Continental Reifen Deutschland GmbH, 30175 Hannover (DE)
(72) Erfinder: Lutz, André, 30175 Hannover (DE); Kristen, Florian, 30175 Hannover (DE)
(74) Vertreter: Continental Corporation

(56) Entgegenhaltungen:
- JP-A- 2023 066 315
- JP-A- 2023 066 318
- US-A1- 2022 410 632
- US-B2- 8 844 591
- US-B2- 9 527 349

## Beschreibung

Die Erfindung betrifft einen Fahrzeugreifen gemäß dem Oberbegriff des Anspruches 1.

Es sind Fahrzeugreifen bekannt, deren Profilierung in der Regel Umfangsrillen und ggf. lateral bzw. axial verlaufende Querrillen aufweisen. Diese Rillen können je nach Bedarf mit Einschnitten (sipes) oder Taschen-Einschnitten (pocket sipes) erweitert werden, um die Nässeeigenschaften des Fahrzeugreifens zu verbessern. Die Einschnitte dienen dabei der Erzeugung oder der Bereitstellung eines zusätzlichen Hohlraums im Fahrzeugreifen, um Wasser aufnehmen zu können, und werden daher auch als hohlraumerzeugende Rillen (void-generating grooves, VGG) bezeichnet. Solche hohlraumerzeugenden Rillen sind beispielsweise in DE 10 2020 204 226 A1, DE 10 2020 212 560 A1 oder US 20220402310 A1 beschrieben.

Weiterhin ist bekannt, dass insbesondere bei Fahrzeugreifen für Nutzfahrzeuge das Rillenvolumen der Umfangsrillen und/oder der Querrillen (insofern vorhanden) geringer gewählt wird, um Anforderungen an den Abrieb und den Rollwiderstand zu erfüllen. Dadurch verringert sich ebenfalls die Menge bzw. das Volumen an Hohlräumen (Void, Negativanteil des Profils) in der Profilierung des Fahrzeugreifens. Es gibt also einen Zielkonflikt zwischen einerseits der Bereitstellung von ausreichend Hohlräumen zur Wasseraufnahme, um die Nässeeigenschaften zu verbessern, und andererseits der Verringerung der Hohlräume zur Verbesserung von Abriebs- und Rollwiderstandsanforderungen. Insbesondere zum Ende des Reifenlebens, wenn die Profilierung bereits größtenteils abgefahren ist und das Rillenvolumen sich noch weiter verringert hat, wird das Problem der Nässeeigenschaften deutlich verschärft.

Weiterhin ist beispielsweise aus US 8844591 B2, JP 5568906 B2 oder JP 8276709 A bekannt, in die Profilierung des Fahrzeugreifens ergänzend eine Lamellenanordnung mit mindestens drei Einschnitten, die von einem Zentrum der Lamellenanordnung in unterschiedliche Richtungen verlaufen, einzubringen. In jedem Einschnitt ist zudem ein verbreiterter Abschnitt vorgesehen, der ausgehend von einer Laufstreifenoberfläche in radialer Richtung zum Grund des jeweiligen Einschnittes verläuft. In JP 05375376 B2 ist ergänzend dazu eine Verdrillung der Einschnitte in radialer Richtung gezeigt. In US 9,527,349 B2 kann der verbreiterte Abschnitt, der in radialer Richtung verläuft, auch im Zentrum der Lamellenanordnung liegen. Derartige Lamellenanordnungen mit drei Einschnitten tragen nicht nur zur Verbesserung der Bremskraft und der Antriebskraft in der Umfangsrichtung des Fahrzeugreifens bei, sondern auch zur Verbesserung der Seitenhaftungsleistung (Drehkraft) in der Querrichtung des Fahrzeugreifens. Auch die Eisperformance eines solchen Fahrzeugreifens wird durch den zusätzlichen verbreiterten Abschnitt verbessert.

In JP 2023066318 A ist ergänzend vorgesehen, dass an einem Grund bzw. innerhalb eines radial inneren Abschnittes der in die drei unterschiedlichen Richtungen verlaufenden Einschnitte jeweils eine Aufweitung senkrecht zur radialen Richtung und zur Ausbreitungsrichtung des jeweiligen Einschnitts vorgesehen ist. Die Einschnitte weisen ausgehend von einer Laufstreifenoberfläche in einem verengten Abschnitt jeweils eine in etwa konstante Breite (im Querschnitt) von ca. 0.4mm über eine Tiefenausdehnung von größer gleich 50% der Gesamttiefe des jeweiligen Einschnittes auf. Eine Tiefenausdehnung des radial inneren Abschnittes, der sich an den verengten Abschnitt anschließt, beträgt dann folglich stets weniger als 50% der Gesamttiefe des jeweiligen Einschnittes, wobei die Breite des Einschnittes in dem radial inneren Abschnitt im Querschnitt in etwa dem Doppelten der Breite des verengten Abschnittes entspricht, also in etwa 0.8mm beträgt. Diese Aufweitung am Grund der Einschnitte bewirkt, dass die einzelnen Einschnitte im Betrieb des Fahrzeugreifens nach unten hin nicht aufreißen bzw. brechen und auch beim Entformen keine Beschädigungen verursacht werden. Die Aufweitungen im radial inneren Abschnitt verbessern also die Langlebigkeit und die Dauerhaltbarkeit des Fahrzeugreifens bzw. der eingebrachten Lamellenanordnung.

Der folgenden Erfindung liegt die Aufgabe zugrunde, einen Fahrzeugreifen anzugeben, bei dem sich nahezu unveränderte Fahreigenschaften bei Nässe über die gesamte Lebensdauer des Fahrzeugreifens erreichen lassen.

Diese Aufgabe wird durch einen Fahrzeugreifen gemäß Anspruch 1 gelöst. Die Unteransprüche geben bevorzugte Weiterbildungen an.

Erfindungsgemäß ist demnach ein Fahrzeugreifen, insbesondere für ein Nutzfahrzeug, mit einem Laufstreifen mit einem eingebrachten Profil, Seitenwänden und Wulstbereichen, vorgesehen, wobei das Profil insbesondere durch Umfangsrillen gebildet wird, die in Umfangsrichtung um den Fahrzeugreifen verlaufen und ausgehend von einer Laufstreifenoberfläche in radialer Richtung über eine Profiltiefe in den Laufstreifen hineinragen, wobei das Profil ergänzend auch Querrillen aufweisen kann,
wobei in dem Laufstreifen, beispielsweise zwischen den Umfangsrillen, ferner mehrere voneinander beabstandete Lamellenanordnungen angeordnet sind, wobei jede Lamellenanordnung mindestens drei Einschnitte (sipes) aufweist, die jeweils ausgehend von der Laufstreifenoberfläche in radialer Richtung über eine Gesamttiefe in den Laufstreifen hineinragen und die sich von einer in radialer Richtung verlaufenden Zentrumslinie ausgehend strahlenförmig, d.h. senkrecht zur radialen Richtung, und vorzugsweise geradlinig in unterschiedliche Richtungen erstrecken, d.h. die Einschnitte treffen über ihre gesamte radiale Ausdehnung an der Zentrumslinie aufeinander,
wobei jeder Einschnitt zumindest einen verengten Abschnitt aufweist, der sich in radialer Richtung über eine zweite Einschnittstiefe erstreckt, und einen radial inneren Abschnitt aufweist, der sich in radialer Richtung über eine dritte Einschnittstiefe erstreckt und den jeweiligen Einschnitt nach radial innen abschließt, d.h. der verengte Abschnitt liegt in radialer Richtung zwischen der Laufstreifenoberfläche und dem radial inneren Abschnitt innerhalb des jeweiligen Einschnittes,
wobei sich eine dritte Einschnittsbreite des radial inneren Abschnittes, die im Querschnitt senkrecht zu der radialen Richtung gemessen wird, über die dritte Einschnittstiefe so verändert, dass sich innerhalb des jeweiligen Einschnitts im Querschnitt senkrecht zu der radialen Richtung (bzw. senkrecht zur Ausbreitungsrichtung des jeweiligen Einschnitts) eine Aufweitung bildet,
wobei die dritte Einschnittstiefe des radial inneren Abschnittes im Neuzustand des Fahrzeugreifens mindestens 50% der Gesamttiefe des jeweiligen Einschnitts beträgt, d.h. die zweite Einschnittstiefe weniger als 50% der Gesamttiefe des jeweiligen Einschnitts ausmacht, und
die dritte Einschnittsbreite an mindestens einem Scheitelpunkt innerhalb des radial inneren Abschnittes einen maximalen Wert annimmt, der mindestens 5mm, vorzugsweise mindestens 6mm, beträgt.

Vorteilhafterweise werden also zumindest dreiflächige Lamellenanordnungen im Profil des Fahrzeugreifens bereitgestellt, die in ihrem unteren bzw. radial inneren Bereich bauchig oder aufgeweitet sind, so dass ab einem gewissen Abnutzungsgrad des Fahrzeugreifens zusätzliche Hohlräume (Void, Negativanteil des Profils) freigelegt werden, in denen beispielsweise Wasser aufgenommen werden kann. Durch die entstehenden oder freigelegten Hohlräume werden also die Nässeeigenschaften ab einem bestimmten Abnutzungsgrad, insbesondere im zweiten Teil des Reifenlebens verbessert. Dies ist insbesondere dann von Vorteil, wenn die Umfangsrillen in dem Profil des Fahrzeugreifens bei stärkerer Abnutzung immer enger werden, beispielsweise um Anforderungen an den Abrieb und den Rollwiderstand zu erfüllen, und dadurch gleichzeitig der Negativanteil des Profils, der durch die Umfangsrillen bereitgestellt wird, sinkt. Dies kann gemäß der Erfindung durch die Lamellenanordnung bzw. die Aufweitungen im radial inneren Bereich der Einschnitte weitestgehend kompensiert werden, da ein Zugang zu neuen Hohlräumen entsteht.

Da mindestens drei derartige Einschnitte mit den radial innenliegenden Aufweitungen je Lammellenanordnung vorgesehen sind, sind diese zusätzlich eingebrachten Strukturen sehr stabil und es treten beim Ein- und Ausformen keine Probleme auf. Liegen die radial inneren Abschnitte noch nicht frei, so ist durch die verengten Abschnitte auch weiterhin eine gute Stützwirkung innerhalb des Profils gegeben, so dass die Abriebs- und Rolleigenschaften des Fahrzeugreifens nicht negativ beeinträchtigt werden.

Gemäß einer weiteren Ausführungsform ist vorgesehen, dass ein Einschnittswinkel zwischen benachbarten Einschnitten derselben Lamellenanordnung
- für alle Einschnitte identisch ist, insbesondere bei drei Einschnitten jeweils bei 120° liegt, oder
- für einige der Einschnitte verschieden ist, insbesondere bei drei Einschnitten zwischen 40° und 160° liegt, wobei ein erster Einschnittswinkel zwischen einem ersten Einschnitt der Lamellenanordnung und einem zweiten Einschnitt derselben Lamellenanordnung beispielsweise zwischen 40° und 60° liegt und ein zweiter Einschnittswinkel zwischen dem zweiten Einschnitt und einem dritten Einschnitt derselben Lamellenanordnung und ein dritter Einschnittswinkel zwischen dem dritten Einschnitt und dem ersten Einschnitt beispielsweise jeweils zwischen 150° und 160° liegen, so dass eine Y-Form gebildet wird. Bei vier Einschnitten innerhalb der Lamellenanordnung kann beispielsweise eine "Andreaskreuz"-Form gebildet werden, bei der die Einschnittswinkel zumindest für einige der Einschnitte ungleich 90° sind.

Auf diese Weise ist eine flexible Anpassung an die Anforderungen an den jeweiligen Fahrzeugreifen möglich, insbesondere im Hinblick auf die Fahreigenschaften und Nässeeigenschaften, die nach dem Freilegen der radial inneren Aufweitungen entsprechend beeinflusst werden kann. Durch eine entsprechende Wahl der Einschnittswinkel können die Einschnitte beispielsweise so ausgerichtet werden, diese nicht quer zur Umfangsrichtung liegen, so dass Wasser besser gefangen werden kann. Durch verschiedene Einschnittswinkel kann dies optimiert werden, indem die Lamellenanordnung derartig in das Profil eingebracht wird, dass ein Winkel zwischen jedem der Einschnitte und der Umfangsrichtung kleiner ist als ein Winkel zwischen jedem der Einschnitte und der Querrichtung. Die Einschnitte sind also tendenziell in die Umfangsrichtung, d.h. in die Fahrtrichtung, ausgerichtet, was die Nässeeigenschaften verbessert.

Vorzugsweise ist weiterhin vorgesehen, dass die dritte Einschnittsbreite an einem Einschnittsgrund, der den radial inneren Abschnitt nach radial innen hin begrenzt bzw. den Einschnitt nach radial innen hin abschließt, einen Grundwert annimmt, der mindestens 3,5mm beträgt. Damit wird ein ausreichend breiter Einschnitt auch bei starkem Abnutzungsgrad bereitgestellt.

Vorzugsweise ist weiterhin vorgesehen, dass die zweite Einschnittsbreite des verengten Bereiches über die zweite Einschnittstiefe innerhalb der Fertigungstoleranzen konstant ist und zwischen 1mm und 3mm liegt. Dadurch ist im Neuzustand und bei noch geringem Abnutzungsgrad eine ausreichende Abstützwirkung des Profils vorhanden, so dass bei diesem Reifenzustand auch weiterhin gute Abroll- und Abriebeigenschaften gegeben sind.

Vorzugsweise ist weiterhin vorgesehen, dass der verengte Abschnitt in radialer Richtung direkt in den radial inneren Abschnitt mündet. Nachdem der verengte Abschnitt also abgenutzt ist, kann direkt der radial innere Abschnitt freigelegt werden, um zusätzliche Hohlräume bereitzustellen. Durch den direkten Übergang, bei dem die Rillenflanken ineinander übergehen, kann eine einfache Herstellung gewährleistet werden.

Vorzugsweise ist weiterhin vorgesehen, dass der jeweilige Einschnitt ausgehend von der Laufstreifenoberfläche einen radial äußeren Abschnitt aufweist, der in radialer Richtung direkt in den verengten Abschnitt mündet, wobei eine erste Einschnittsbreite des radial äußeren Abschnittes an der Laufstreifenoberfläche im Querschnitt zwischen 3mm und 10mm, insbesondere zwischen 6mm und 8mm, beträgt und/oder eine erste Einschnittstiefe des radial äußeren Abschnittes zwischen 2mm und 5mm beträgt, und wobei der radial äußere Abschnitt in radialer Richtung trichterförmig verläuft. An der radial äußeren Seite des jeweiligen Einschnittes wird also ein sanfter Übergang zum verengten Abschnitt des Einschnitts geschaffen.

Vorzugsweise ist weiterhin vorgesehen, dass die erste Einschnittstiefe des radial äußeren Abschnittes und die zweite Einschnittstiefe des verengten Abschnittes im Neuzustand des Fahrzeugreifens in Summe weniger als 50% der Gesamttiefe des jeweiligen Einschnitts betragen, wobei die erste Einschnittstiefe im Neuzustand des Fahrzeugreifens zwischen 10% und 20% der Gesamttiefe des jeweiligen Einschnitts und die zweite Einschnittstiefe im Neuzustand des Fahrzeugreifens zwischen 30% und 40% der Gesamttiefe des jeweiligen Einschnitts betragen. Bei dieser Aufteilung sind eine einfache Herstellung und ein ausreichender Übergang zur radial inneren Aufweitung gegeben.

Vorzugsweise ist weiterhin vorgesehen, dass die dritte Einschnittsbreite an dem mindestens einen Scheitelpunkt innerhalb des radial inneren Abschnittes einen maximalen Wert annimmt, der maximal 10mm, vorzugsweise maximal 9mm, insbesondere maximal 8mm beträgt. Am breitesten Punkt (im Querschnitt senkrecht zur radialen Richtung) nimmt der radial innere Abschnitt also je nach Art und Anforderung an den jeweiligen Fahrzeugreifen einen Wert an, der zwischen 5mm und 10mm liegt, vorzugsweise zwischen 6mm und 8mm. Bei derartigen maximalen Werten für die dritte Einschnittsbreite wird je nach Anforderung und Art des Fahrzeugreifens eine optimierte Wasseraufnahme gewährleistet, um die Nässeeigenschaften ab dem jeweiligen Abnutzungsgrad zu verbessern.

Vorzugsweise ist weiterhin vorgesehen, dass die Gesamttiefe des jeweiligen Einschnitts zwischen 10mm und 25mm beträgt, wobei die Gesamttiefe aller Einschnitte einer Lamellenanordnung, vorzugsweise aller Lamellenanordnungen, innerhalb der Fertigungstoleranz identisch sind. Die Gesamttiefe kann also auf einen Bereich für übliche Profiltiefen gesetzt werden, um beim jeweiligen Abnutzungsgrad je nach Art des Fahrzeugreifens einen Zugang zu den Aufweitungen zu ermöglichen. Dabei kann vorzugsweise vorgesehen sein, dass die Gesamttiefe des jeweiligen Einschnitts größer gleich der Profiltiefe des Profils ist. Die Aufweitungen der Einschnitte sind also mit den Umfangsrillen komplett abgefahren oder können auch nach einer vollständigen Abnutzung der Umfangsrillen noch zumindest für einen gewissen Zeitraum einen zusätzlichen Hohlraum bereitstellen.

Vorzugsweise ist weiterhin vorgesehen, dass benachbarte Lamellenanordnungen um ihre Zentrumslinie gegeneinander verdreht zueinander angeordnet sind, insbesondere benachbarte Lamellenanordnungen, die in dem Laufstreifen in Querrichtung benachbart zueinander angeordnet sind. Auf diese Weise können über unterschiedliche Profilbereiche unterschiedliche Ausrichtungen der Einschnitte gewählt werden, um der unterschiedlichen Beanspruchung des Profils im Betrieb des Fahrzeugreifens Rechnung zu tragen.

Vorzugsweise ist weiterhin vorgesehen, dass eine Längsausdehnung eines Einschnittes ausgehend von der Zentrumslinie zwischen 5mm und 25mm, insbesondere zwischen 15mm und 25mm beträgt. Auf diese Weise wird pro Lamellenordnung ein ausreichendes Volumen für zusätzliche Hohlräume bereitgestellt, so dass weniger Lamellenanordnungen im Reifen bereitzustellen sind, beispielsweise in Querrichtung gesehen lediglich eine Lamellenanordnung zwischen zwei benachbarten Umfangsrillen, und entsprechend in Umfangsrichtung auf dem gesamten Umfang verteilt.

Vorzugsweise ist weiterhin vorgesehen, dass zumindest ein Einschnitt mindestens einer der Lamellenanordnungen in eine der Umfangsrillen in dem Profil mündet. Auf diese Weise kann das aufgenommene Wasser über die Umfangsrille effektiv abgeführt werden.

In den Zeichnungen zeigen:
- Fig. 1: einen Fahrzeugreifen in einem Querschnitt;
- Fig. 2: eine Draufsicht auf den Fahrzeugreifen gemäß Fig. 1;
- Fig. 3: eine Detailansicht einer Lamellenanordnung in dem Fahrzeugreifen gemäß Fig. 1; und
- Fig. 4: eine Schnittansicht durch einen Einschnitt der Lamellenanordnung gemäß Fig. 3.

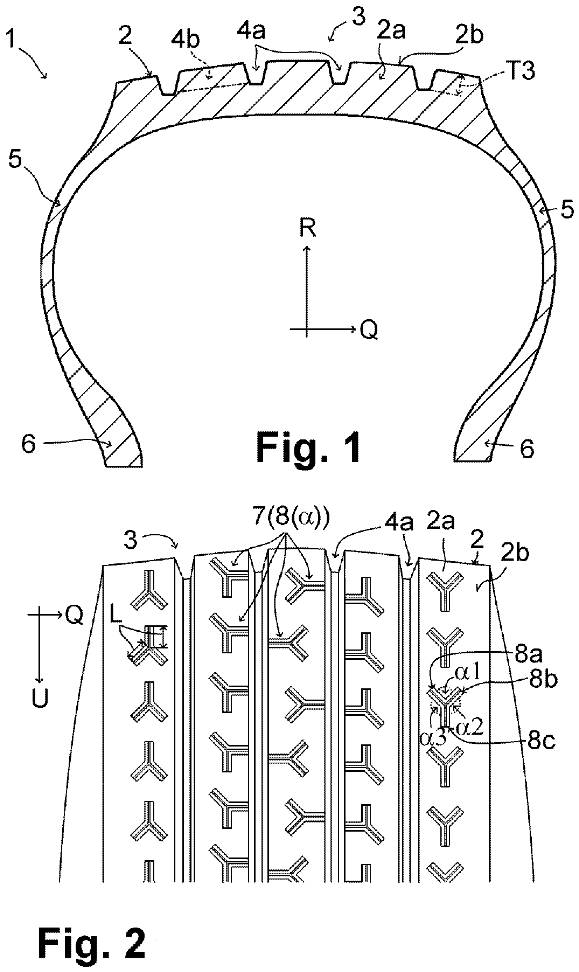

Figur 1 zeigt einen Fahrzeugreifen 1, insbesondere für Nutzfahrzeuge, mit einem Laufstreifen 2, ein in den Laufstreifen 2 eingebrachtes Profil 3 mit einer Profiltiefe T3, wobei das Profil 3 zumindest durch Umfangsrillen 4a und je nach Fahrzeugreifen 1 auch durch Querrillen 4b gebildet wird, Seitenwänden 5 und Wulstbereichen 6. Durch die Umfangsrillen 4a und ggf. die Querrillen 4b wird der Laufstreifen 2 in Umfangsrichtung U und ggf. in Querrichtung Q in mehrere Profilblöcke 2a unterteilt. Der Aufbau wird durch entsprechende Verstärkungseinlagen (Karkasse, Wulstkern, etc., nicht dargestellt) wie allseits bekannt verstärkt. **In** der Lauffläche 2 sind ferner mehrere Lamellenanordnungen 7 eingebracht, die in einer Draufsicht auf den Fahrzeugreifen 1 in Fig. 2 dargestellt sind.

Jede Lamellenanordnung 7 besteht demnach aus mindestens drei Einschnitten 8, d.h. einem ersten Einschnitt 8a, einem zweiten Einschnitt 8b und einem dritten Einschnitt 8c, die jeweils von einer in radialer Richtung R verlaufenden Zentrumslinie 9 ausgehend vorzugsweise geradlinig bzw. strahlenförmig in drei unterschiedliche Richtungen verlaufen bis sie jeweils innerhalb des Laufstreifens 2 bzw. eines Profilblocks 2a an einer sich in radialer Richtung erstreckenden Endflanke 11 enden. Wie für die Lamellenanordnungen 7 in den mittleren drei Profilblockreihen in Fig. 2 dargestellt, können einzelne Einschnitte 8; 8a, 8b, 8c auch in die Umfangsrillen 4a münden.

Eine Längsausdehnung L der Einschnitte 8 beträgt dabei beispielsweise zwischen 5mm und 25mm, vorzugsweise zwischen 15mm und 25mm, wobei die Längsausdehnung L unterschiedlicher Einschnitte 8 einer Lamellenanordnung 7 auch variieren kann. Wie aus Fig. 2 ersichtlich, können die Einschnitte 8; 8a, 8b, 8c unterschiedlicher Lamellenanordnungen 7 eine unterschiedliche Ausrichtung gegenüber der Umfangsrichtung U aufweisen, d.h. unterschiedliche Lamellenanordnungen 7 sind um die Zentrumslinie 9 gegeneinander verdreht, so dass beispielsweise ein Einschnitt 8; 8a, 8b, 8c in Umfangsrichtung U verläuft oder aber keiner der Einschnitte 8; 8a, 8b, 8c in die Umfangsrichtung U verläuft. Da jede Lamellenanordnung 7 dreiflächig ist bzw. drei Einschnitte aufweist, sind diese Strukturen sehr stabil und es treten beim Ein- und Ausformen keine Probleme auf.

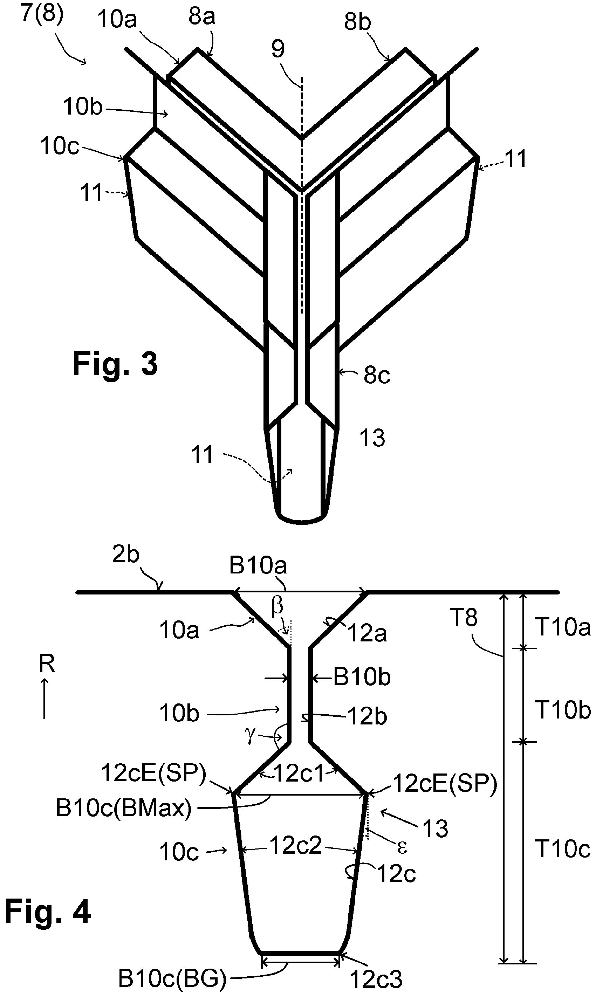

Ein Einschnittswinkel α zwischen benachbarten Einschnitten 8; 8a, 8b, 8c beträgt dabei beispielsweise zwischen 40° und 160°. Die drei Einschnitte 8; 8a, 8b, 8c können dabei gleichmäßig über den vollen Winkel verteilt sein, d.h. ein erster Einschnittswinkel α1 zwischen dem ersten Einschnitt 8a und dem zweiten Einschnitt 8b entspricht einem zweiten Einschnittswinkel α2 zwischen dem zweiten Einschnitt 8b und dem dritten Einschnitt 8c und einem dritten Einschnittswinkel α3 zwischen dem dritten Einschnitt 8c und dem ersten Einschnitt 8a, d.h. α1 = α2 = α3 = 120° (nicht dargestellt). Wie in Fig. 2 und 3 dargestellt, kann aber beispielsweise auch eine Y-Form vorgesehen sein, für die dann beispielsweise gilt α1 = 60°, α2 = α3 = 150°. Bei vier oder mehr Einschnitten 8 sind entsprechend angepasste Winkel α vorgesehen.

Jeder Einschnitt 8 weist ausgehend von einer Laufstreifenoberfläche 2b nach radial innen verlaufend zunächst einen radial äußeren Abschnitt 10a auf, der in einen verengten Abschnitt 10b übergeht, wie in Fig. 3 und 4 detailliert dargestellt. Der radial äußere Abschnitt 10a ist im Querschnitt trichterförmig ausgeführt und wird durch erste Flankenbereiche 12a ausgebildet, die ausgehend von der Laufstreifenoberfläche 2b um einen Flankenwinkel β von zwischen 25° und 70°, vorzugsweise zwischen 45° und 70°, zu der radialen Richtung R verlaufen. Eine erste Einschnittsbreite B10a des radial äußeren Abschnittes 10a beträgt im Querschnitt direkt an der Laufstreifenoberfläche 2b zwischen 3mm und 10mm, insbesondere zwischen 6mm und 8mm, und eine erste Einschnittstiefe T10a des radial äußeren Abschnittes 10a beträgt zwischen 2mm und 5mm. Die erste Einschnittstiefe T10a kann beispielsweise zwischen 10% und 20% einer Gesamttiefe T8 des jeweiligen Einschnitts 8 (im Neuzustand des Fahrzeugreifens 1) gewählt werden, wobei die Gesamttiefe T8 je nach Fahrzeugreifen 1 zwischen 10mm und 25mm beträgt. Sämtliche Tiefen werden dabei im Rahmen der Erfindung senkrecht zur Laufstreifenoberfläche 2b gemessen.

Ausgehend von dem radial äußeren Abschnitt 10a verlaufen zweite Flankenbereiche 12b innerhalb des verengten Abschnittes 10b im Querschnitt in etwa parallel zueinander in radialer Richtung R weiter nach innen, wobei die ersten Flankenbereiche 12a unmittelbar in die zweiten Flankenbereiche 12b übergehen. Eine zweite Einschnittsbreite B10b des verengten Abschnittes 10b, die im Querschnitt zwischen den zweiten Flankenbereichen 12b gemessen wird, beträgt zwischen 1 mm bis 3 mm und ist kleiner als die erste Einschnittsbreite B10a, die an der Laufstreifenoberfläche 2b vorliegt. Eine zweite Einschnittstiefe T10b des verengten Abschnittes 10b beträgt zwischen 3mm und 8mm. Die zweite Einschnittstiefe T10b kann beispielsweise zwischen 30% und 40% der Gesamttiefe T8 des jeweiligen Einschnitts 8 (im Neuzustand des Fahrzeugreifens 1) gewählt werden.

Der verengte Abschnitt 10b geht in radialer Richtung R in einen radial inneren Abschnitt 10c über, wobei dieser radial innere Abschnitt 10c innerhalb des jeweiligen Einschnitts 8 eine Aufweitung 13 im Querschnitt senkrecht zur radialen Richtung R bildet. Im Querschnitt ist der radial innere Abschnitt 10c durch dritte Flankenbereiche 12c begrenzt, wobei die zweiten Flankenbereiche 12b unmittelbar in die dritten Flankenbereiche 12c übergehen. Die dritten Flankenbereiche 12c werden gebildet durch zwei Deckenflanken 12c1, die den radial inneren Abschnitt 10c nach oben bzw. radial außen hin begrenzen und zwei Seitenflanken 12c2, die den radial inneren Abschnitt 10c zur Seite hin (senkrecht zur radialen Richtung R) begrenzen. Die Seitenflanken 12c2 gehen anschließend in einen Einschnittsgrund 12c3 über, der den jeweiligen Einschnitt 8 nach unten bzw. radial innen hin begrenzt.

Die beiden Deckenflanken 12c1 verlaufen ausgehend von den zweiten Flankenbereichen 12b im verengten Abschnitt 10b jeweils unter einem stumpfen Außenwinkel γ zu diesen, wobei der Außenwinkel γ zwischen 95° und 135°, vorzugsweise 105° beträgt. Eine dritte Einschnittsbreite B10c des radial inneren Abschnittes 10c nimmt in der dargestellten Ausführungsform an den äußeren Enden 12cE der beiden Deckenflanken 12c1, die innerhalb des radial inneren Abschnittes 10c jeweils Scheitelpunkte SP bilden, im Querschnitt einen maximalen Wert BMax an, der zwischen 5mm und 10mm, insbesondere zwischen 6mm und 8mm liegt. Die zwei Seitenflanken 12c2 schließen sich unmittelbar an die äußeren Enden 12cE der beiden Deckenflanken 12c1 an und verlaufen dann unter Verringerung ihres gegenseitigen Abstandes unter einem Winkel ε von zwischen 5° und 25°, vorzugsweise von 10° bis 20°, zur radialen Richtung R in Richtung des Einschnittsgrundes 12c3. Am Einschnittsgrund 12c3 nimmt die dritte Einschnittsbreite B10c im Querschnitt einen Grundwert BG an, der mindestens 3,5mm beträgt.

Die dritten Flankenbereiche 12c können auch einen anderen Verlauf aufweisen, beispielsweise auch einen abgerundeten Verlauf, bei dem die dritte Einschnittsbreite B10c ausgehend von dem zweiten Flankenbereich 12b zunächst auf den oben genannten maximalen Wert BMax an den entsprechend ausgeführten Scheitelpunkten SP ansteigt, um dann radial innenseitig bzw. unterseitig in dem Einschnittsgrund 12c3 auf den Grundwert BG abzufallen. Mit diesem oder mit einem vergleichbaren radialen Verlauf der dritten Flankenbereiche 12c wird im radial inneren Abschnitt 10c gegenüber dem darüberliegenden verengten Abschnitt 10b eine Aufweitung 13 im Querschnitt senkrecht zur radialen Richtung R ausgebildet.

Eine dritte Einschnittstiefe T10c des radial inneren Abschnittes 10c beträgt dabei zwischen 5mm und 13mm. Die dritte Einschnittstiefe T10c nimmt dabei mindestens 50% der Gesamttiefe T8 des jeweiligen Einschnitts 8 (im Neuzustand des Fahrzeugreifens 1) ein. Die erste Einschnittstiefe T10a und die zweite Einschnittstiefe T10b sind also in Summe kleiner oder gleich 50% der Gesamttiefe T8 des jeweiligen Einschnitts 8 (im Neuzustand des Fahrzeugreifens 1). Dies bedeutet, dass sich im radial inneren Abschnitt 10c eine Aufweitung 13 ausbildet, die eine größere Querschnittsfläche bzw. ein größeres Volumen aufweist als der verengte Abschnitt 10b und der radial äußere Abschnitt 10a zusammen.

Hat sich die Profiltiefe T3 des Fahrzeugreifens 1 im Betrieb des Fahrzeugreifens 1 um die erste Einschnittstiefe T10a und die zweite Einschnittstiefe T10b verringert, liegen bei einer weiteren Abnutzung des Fahrzeugreifens 1 die radial inneren Abschnitte 10c sämtlicher Lamellenanordnungen 7 im Bereich der Laufstreifenoberfläche 2b mit ihren Aufweitungen 13 frei, wodurch weitere Hohlräume (Void) in dem Profil 3 von radial außen zugänglich werden. In diesen weiteren Hohlräumen kann dann in diesem abgefahrenen Zustand des Fahrzeugreifens 1 jeweils zusätzliches Wasser aufgenommen werden.

Dies ist insbesondere dann von Vorteil, wenn die Umfangsrillen 4a und ggf. auch die Querrillen 4b in dem Profil 3 des Fahrzeugreifens 1 bei stark verringerter Profiltiefe T3 immer schmaler werden (um Rollwiderstandsanforderungen zu erfüllen) und sich daher das Gesamtvolumen der vorhandenen Hohlräume (Void) im Profil 3 zum Ende des "Reifenlebens" stark verringert. Dadurch verschlechtern sich die durch die Umfangsrillen 4a und ggf. die Querrillen 4b beeinflussten Nässeeigenschaften des Fahrzeugreifens 1. Gleichzeitig werden aber durch die radial inneren Abschnitte 10c sämtlicher Einschnitte 8 der Lamellenanordnungen 7 zusätzliche Hohlräume bereitgestellt, sobald sich die Profiltiefe T3 des Profils 3 ausgehend vom Neuzustand um die Summe aus erster Einschnittstiefe T10a und zweiter Einschnittstiefe T10b verringert hat. Diese zusätzlichen Hohlräume können die Volumenverringerung der Umfangsrillen 4a und der möglicherweise vorhandenen Querrillen 4b zumindest anteilig kompensieren. Dadurch kann auch bei stark abgefahrenem Fahrzeugreifen 1 noch Wasser im Profil 3 aufgenommen werden, so dass der Fahrzeugreifen 1 auch dann noch gute Nässeeigenschaften aufweist.

Demnach werden die Gesamttiefe T8 des Einschnitts 8 und dabei insbesondere die erste Einschnittstiefe T10a des radial äußeren Abschnitts 10a und die zweite Einschnittstiefe T10b des verengten Abschnitts 10b derartig gewählt, dass das Freilegen des radial inneren Abschnittes 10c genau dann erfolgt, wenn die zusätzlichen Hohlräume für die Verbesserung bzw. die Kompensation der verminderten Nässeeigenschaft benötigt werden. Dies ist beispielsweise dann der Fall, wenn sich die Profiltiefe T3 ausgehend vom Neuzustand des Fahrzeugreifens 1 auf einen Wert von ca. 50% verringert hat, so dass die Summe aus der ersten Einschnittstiefe T10a und der zweiten Einschnittstiefe T10b in etwa 50% der Profiltiefe T3 im Neuzustand des Fahrzeugreifens 1 entspricht.

### Bezugszeichenliste

- 1: Fahrzeugreifen
- 2: Laufstreifen
- 2a: Profilblock
- 2b: Laufstreifenoberfläche
- 3: Profil
- 4a: Umfangsrille
- 4b: Querrille
- 5: Seitenwand
- 6: Wulstbereich
- 7: Lamellenanordnung
- 8: Einschnitt
- 8a: erster Einschnitt
- 8b: zweiter Einschnitt
- 8c: dritter Einschnitt
- 9: Zentrumslinie
- 10a: radial äußerer Abschnitt
- 10b: verengter Abschnitt
- 10c: radial innerer Abschnitt
- 11: Endflanke
- 12a: erster Flankenbereich
- 12b: zweiter Flankenbereich
- 12c: dritter Flankenbereich
- 12c1: Deckenflanke
- 12c2: Seitenflanke
- 12c3: Einschnittsgrund
- 12cE: äußeres Ende der Deckenflanke 12c1
- 13: Aufweitung
- α: Einschnittswinkel
- α1: erster Einschnittswinkel
- α2: zweiter Einschnittswinkel
- α3: dritter Einschnittswinkel
- β: Flankenwinkel des ersten Flankenbereichs 12a
- γ: Außenwinkel der Deckenflanke 12c1
- ε: Winkel der Seitenflanke 12c2

- B10a: erste Einschnittsbreite
- B10b: zweite Einschnittsbreite
- B10c: dritte Einschnittsbreite
- BG: Grundwert der dritten Einschnittsbreite B10c
- BMax: maximaler Wert der dritten Einschnittsbreite B10c
- L: Längsausdehnung des Einschnitts 8
- R: radiale Richtung
- SP: Scheitelpunkt
- T3: Profiltiefe
- T8: Gesamttiefe des Einschnitts 8
- T10a: erste Einschnittstiefe
- T10b: zweite Einschnittstiefe
- T10c: dritte Einschnittstiefe
- Q: Querrichtung
- U: Umfangsrichtung

## Patentansprüche

1. Fahrzeugreifen (1), insbesondere für ein Nutzfahrzeug, mit einem Laufstreifen (2) mit einem eingebrachten Profil (3), Seitenwänden (5) und Wulstbereichen (6), wobei das Profil (3) durch Umfangsrillen (4a) gebildet wird, die in Umfangsrichtung (U) um den Fahrzeugreifen (1) verlaufen und ausgehend von einer Laufstreifenoberfläche (2a) in radialer Richtung (R) über eine Profiltiefe (T3) in den Laufstreifen (2) hineinragen,
wobei in dem Laufstreifen (2) ferner mehrere Lamellenanordnungen (7) angeordnet sind, wobei jede Lamellenanordnung (7) mindestens drei Einschnitte (8) aufweist, die jeweils ausgehend von der Laufstreifenoberfläche (2a) in radialer Richtung (R) über eine Gesamttiefe (T8) in den Laufstreifen (2) hineinragen und die sich von einer in radialer Richtung (R) verlaufenden Zentrumslinie (9) ausgehend strahlenförmig in unterschiedliche Richtungen erstrecken,
wobei jeder Einschnitt (8) zumindest einen verengten Abschnitt (10b) aufweist, der sich in radialer Richtung (R) über eine zweite Einschnittstiefe (T10b) erstreckt, und einen radial inneren Abschnitt (10c) aufweist, der sich in radialer Richtung (R) über eine dritte Einschnittstiefe (T10c) erstreckt und den jeweiligen Einschnitt (8) nach radial innen abschließt,
wobei sich eine dritte Einschnittsbreite (B10c) des radial inneren Abschnittes (10c), die im Querschnitt senkrecht zu der radialen Richtung (R) gemessen wird, über die dritte Einschnittstiefe (T10c) so verändert, dass sich innerhalb des jeweiligen Einschnitts (8) im Querschnitt senkrecht zu der radialen Richtung (R) eine Aufweitung (13) bildet,
**dadurch gekennzeichnet, dass**
die dritte Einschnittstiefe (T10c) des radial inneren Abschnittes (10c) mindestens 50% der Gesamttiefe (T8) des jeweiligen Einschnitts (8) beträgt, und
die dritte Einschnittsbreite (B10c) an mindestens einem Scheitelpunkt (SP) innerhalb des radial inneren Abschnittes (10c) einen maximalen Wert (BMax) annimmt, der mindestens 5mm, vorzugsweise mindestens 6mm, beträgt.

2. Fahrzeugreifen (1) nach Anspruch 1,
**dadurch gekennzeichnet, dass**
ein Einschnittswinkel (α) zwischen benachbarten Einschnitten (8) derselben Lamellenanordnung (7)
- für alle Einschnitte (8) identisch ist, insbesondere bei drei Einschnitten (8; 8a, 8b, 8c) jeweils bei 120° liegt, oder
- für einige der Einschnitte (8) verschieden ist, insbesondere bei drei Einschnitten (8; 8a, 8b, 8c) zwischen 40° und 160° liegt.

3. Fahrzeugreifen (1) nach Anspruch 2,
**dadurch gekennzeichnet, dass**
ein erster Einschnittswinkel (α1) zwischen einem ersten Einschnitt (8a) der Lamellenanordnung (7) und einem zweiten Einschnitt (8b) derselben Lamellenanordnung (7) zwischen 40° und 60° liegt und ein zweiter Einschnittswinkel (α2) zwischen dem zweiten Einschnitt (8b) und einem dritten Einschnitt (8c) derselben Lamellenanordnung (7) und ein dritter Einschnittswinkel (α3) zwischen dem dritten Einschnitt (8c) und dem ersten Einschnitt (8a) jeweils zwischen 150° und 160° liegen.

4. Fahrzeugreifen (1) nach einem der vorhergehenden Ansprüche,
**dadurch gekennzeichnet, dass**
die dritte Einschnittsbreite (B10c) an einem Einschnittsgrund (12c3), der den radial inneren Abschnitt (10c) nach radial innen hin begrenzt, einen Grundwert (BG) annimmt, der mindestens 3,5mm beträgt.

5. Fahrzeugreifen (1) nach einem der vorhergehenden Ansprüche,
**dadurch gekennzeichnet, dass**
die zweite Einschnittsbreite (B10b) des verengten Bereiches (10b) über die zweite Einschnittstiefe (T10b) in etwa konstant ist und zwischen 1mm und 3mm liegt.

6. Fahrzeugreifen (1) nach einem der vorhergehenden Ansprüche,
**dadurch gekennzeichnet, dass**
der verengte Abschnitt (10b) in radialer Richtung (R) direkt in den radial inneren Abschnitt (10c) mündet.

7. Fahrzeugreifen (1) nach einem der vorhergehenden Ansprüche,
**dadurch gekennzeichnet, dass**
der jeweilige Einschnitt (8) ausgehend von der Laufstreifenoberfläche (2a) einen radial äußeren Abschnitt (10a) aufweist, der in radialer Richtung (R) direkt in den verengten Abschnitt (10b) mündet, wobei eine erste Einschnittsbreite (B10a) des radial äußeren Abschnittes (10a) an der Laufstreifenoberfläche (2a) im Querschnitt zwischen 3mm und 10mm, insbesondere zwischen 6mm und 8mm, beträgt und/oder eine erste Einschnittstiefe (T10a) des radial äußeren Abschnittes (10a) zwischen 2mm und 5mm beträgt, und
wobei der radial äußere Abschnitt (10a) in radialer Richtung (R) trichterförmig verläuft.

8. Fahrzeugreifen (1) nach Anspruch 7,
**dadurch gekennzeichnet, dass**
die erste Einschnittstiefe (T10a) des radial äußeren Abschnittes (10a) und die zweite Einschnittstiefe (T10b) des verengten Abschnittes (10b) in Summe weniger als 50% der Gesamttiefe (T8) des jeweiligen Einschnitts (8) betragen,
wobei die erste Einschnittstiefe (T10a) vorzugsweise zwischen 10% und 20% der Gesamttiefe (T8) des jeweiligen Einschnitts (8) und die zweite Einschnittstiefe (T10b) vorzugsweise zwischen 30% und 40% der Gesamttiefe (T8) des jeweiligen Einschnitts (8) betragen.

9. Fahrzeugreifen (1) nach einem der vorhergehenden Ansprüche,
**dadurch gekennzeichnet, dass**
die dritte Einschnittsbreite (B10c) an dem mindestens einen Scheitelpunkt (SP) innerhalb des radial inneren Abschnittes (10c) einen maximalen Wert (BMax) annimmt, der maximal 10mm, vorzugsweise maximal 9mm, insbesondere maximal 8mm beträgt.

10. Fahrzeugreifen (1) nach einem der vorhergehenden Ansprüche,
**dadurch gekennzeichnet, dass**
die Gesamttiefe (T8) des jeweiligen Einschnitts (8) zwischen 10mm und 25mm beträgt, wobei die Gesamttiefe (T8) aller Einschnitte (8) einer Lamellenanordnung (7), vorzugsweise aller Lamellenanordnungen (7), identisch ist.

11. Fahrzeugreifen (1) nach einem der vorhergehenden Ansprüche,
**dadurch gekennzeichnet, dass**
die Gesamttiefe (T8) des jeweiligen Einschnitts (8) größer gleich der Profiltiefe (T3) des Profils (3) ist.

12. Fahrzeugreifen (1) nach einem der vorhergehenden Ansprüche,
**dadurch gekennzeichnet, dass**
benachbarte Lamellenanordnungen (7) um ihre Zentrumslinie (9) gegeneinander verdreht zueinander angeordnet sind, insbesondere benachbarte Lamellenanordnungen (7), die in dem Laufstreifen (2) in Querrichtung (Q) versetzt zueinander angeordnet sind.

13. Fahrzeugreifen (1) nach einem der vorhergehenden Ansprüche,
**dadurch gekennzeichnet, dass**
eine Längsausdehnung (L) des jeweiligen Einschnittes (8) einer Lamellenanordnung (7) ausgehend von der Zentrumslinie (9) zwischen 5mm und 25mm, insbesondere zwischen 15mm und 25mm beträgt.

14. Fahrzeugreifen (1) nach einem der vorhergehenden Ansprüche,
**dadurch gekennzeichnet, dass**
zumindest ein Einschnitt (8) mindestens einer der Lamellenanordnungen (7) in eine der Umfangsrillen (4a) in dem Profil (3) mündet.

## Claims

1. Vehicle tyre (1), in particular for a utility vehicle, having a tread (2) which has an incorporated profile (3), sidewalls (5) and has bead regions (6), wherein the profile (3) is formed by circumferential grooves (4a) which extend in a circumferential direction (U) around the vehicle tyre (1) and which, proceeding from a tread surface (2a), project into the tread (2) in a radial direction (R) over a profile depth (T3),
wherein multiple lamella arrangements (7) are furthermore arranged in the tread (2), wherein each lamella arrangement (7) has at least three sipes (8) which, in each case proceeding from the tread surface (2a), project into the tread (2) in the radial direction (R) over a total depth (T8) and which, proceeding from a centre line (9) in the radial direction (R), extend in different directions in a radiant manner, wherein each sipe (8) has at least one narrowed portion (10b) which extends in the radial direction (R) over a second sipe depth (T10b), and has a radially inner portion (10c) which extends in the radial direction (R) over a third sipe depth (T10c) and which radially inwardly terminates the respective sipe (8),
wherein a third sipe width (B10c) of the radially inner portion (10c), which is measured perpendicularly to the radial direction (R) in cross section, varies over the third sipe depth (T10c) in such a way that, within the respective sipe (8), a widening (13) forms perpendicularly to the radial direction (R) in cross section, **characterized in that**
the third sipe depth (T10c) of the radially inner portion (10c) is at least 50% of the total depth (T8) of the respective sipe (8), and the third sipe width (B10c) assumes a maximum value (BMax) of at least 5 mm, preferably at least 6 mm, at at least one vertex (SP) within the radially inner portion (10c).

2. Vehicle tyre (1) according to Claim 1,
**characterized in that**
a sipe angle (α) between adjacent sipes (8) of the same lamella arrangement (7)
- is identical for all the sipes (8), in particular is respectively 120° in the case of three sipes (8; 8a, 8b, 8c), or
- is different for some of the sipes (8), in particular is between 40° and 160° in the case of three sipes (8; 8a, 8b, 8c).

3. Vehicle tyre (1) according to Claim 2,
**characterized in that**
a first sipe angle (α1) between a first sipe (8a) of the lamella arrangement (7) and a second sipe (8b) of the same lamella arrangement (7) is between 40° and 60°, and a second sipe angle (α2) between the second sipe (8b) and a third sipe (8c) of the same lamella arrangement (7) and a third sipe angle (α3) between the third sipe (8c) and the first sipe (8a) are respectively between 150° and 160°.

4. Vehicle tyre (1) according to one of the preceding claims,
**characterized in that**
the third sipe width (B10c) assumes a basic value (BG) of at least 3.5 mm at a sipe base (12c3), which radially inwardly delimits the radially inner portion (10c).

5. Vehicle tyre (1) according to one of the preceding claims,
**characterized in that**
the second sipe width (B10b) of the narrowed region (10b) is approximately constant over the second sipe depth (T10b) and is between 1 mm and 3 mm.

6. Vehicle tyre (1) according to one of the preceding claims,
**characterized in that**
the narrowed portion (10b) opens out directly into the radially inner portion (10c) in the radial direction (R).

7. Vehicle tyre (1) according to one of the preceding claims,
**characterized in that**
the respective sipe (8) has, proceeding from the tread surface (2a), a radially outer portion (10a) which opens out directly into the narrowed portion (10b) in the radial direction (R), wherein a first sipe width (B10a) of the radially outer portion (10a) is between 3 mm and 10 mm, in particular between 6 mm and 8 mm, at the tread surface (2a) in cross section, and/or a first sipe depth (T10a) of the radially outer portion (10a) is between 2 mm and 5 mm, and
wherein the radially outer portion (10a) extends in the radial direction (R) in a funnel-shaped manner.

8. Vehicle tyre (1) according to Claim 7,
**characterized in that**
the first sipe depth (T10a) of the radially outer portion (10a) and the second sipe depth (T10b) of the narrowed portion (10b) add up to less than 50% of the total depth (T8) of the respective sipe (8),
wherein the first sipe depth (T10a) is preferably between 10% and 20% of the total depth (T8) of the respective sipe (8), and the second sipe depth (T10b) is preferably between 30% and 40% of the total depth (T8) of the respective sipe (8).

9. Vehicle tyre (1) according to one of the preceding claims,
**characterized in that**
the third sipe width (B10c) assumes a maximum value (BMax) of at most 10 mm, preferably at most 9 mm, in particular at most 8 mm, at the at least one vertex (SP) within the radially inner portion (10c).

10. Vehicle tyre (1) according to one of the preceding claims,
**characterized in that**
the total depth (T8) of the respective sipe (8) is between 10 mm and 25 mm, wherein the total depth (T8) of all the sipes (8) of a lamella arrangement (7), preferably of all the lamella arrangements (7), is identical.

11. Vehicle tyre (1) according to one of the preceding claims,
**characterized in that**
the total depth (T8) of the respective sipe (8) is greater than or equal to the profile depth (T3) of the profile (3).

12. Vehicle tyre (1) according to one of the preceding claims,
**characterized in that**
adjacent lamella arrangements (7), in particular adjacent lamella arrangements (7) arranged offset from one another in a transverse direction (Q) in the tread (2), are arranged in relation to one another so as to be rotated about their centre line (9) with respect to one another.

13. Vehicle tyre (1) according to one of the preceding claims,
**characterized in that**
a longitudinal extent (L) of the respective sipe (8) of a lamella arrangement (7) proceeding from the centre line (9) is between 5 mm and 25 mm, in particular between 15 mm and 25 mm.

14. Vehicle tyre (1) according to one of the preceding claims,
**characterized in that**
at least one sipe (8) of at least one of the lamella arrangements (7) opens out into one of the circumferential channels (4a) in the profile (3).

## Revendications

1. Pneu (1) pour véhicule, notamment pour un véhicule utilitaire, comportant une bande de roulement (2) pourvue d'un profil (3), des flancs (5) et des zones de talon (6), le profil (3) étant formé par des rainures circonférentielles (4a) qui s'étendent autour du pneumatique de véhicule (1) dans la direction circonférentielle (U) et pénètrent dans la bande de roulement (2), depuis une surface de bande de roulement (2a), dans la direction radiale (R), sur une profondeur de profil (T3),
dans lequel plusieurs agencements de lamelles (7) sont en outre disposés dans la bande de roulement (2), chaque agencement de lamelles (7) présentant au moins trois incisions (8) qui, chacune, pénètrent dans la bande de roulement (2), depuis la surface de bande de roulement (2a), dans la direction radiale (R), sur une profondeur totale (T8), et qui s'étendent radialement dans différentes directions à partir d'une ligne centrale (9) s'étendant dans la direction radiale (R),
chaque incision (8) présentant au moins une section rétrécie (10b) qui s'étend dans la direction radiale (R) sur une deuxième profondeur d'incision (T10b), et une section radialement intérieure (10c) qui s'étend dans la direction radiale (R) sur une troisième profondeur d'incision (T10c) et ferme l'incision respective (8) radialement vers l'intérieur,
une troisième largeur d'incision (B10c) de la section radialement intérieure (10c), mesurée dans une section transversale perpendiculaire à la direction radiale (R), variant sur la troisième profondeur d'incision (T10c) de telle sorte qu'un élargissement (13) se forme à l'intérieur de l'incision respective (8), dans une section transversale perpendiculaire à la direction radiale (R),
**caractérisé en ce que**
la troisième profondeur d'incision (T10c) de la section radialement intérieure (10c) représentant au moins 50 % de la profondeur totale (T8) de l'incision respective (8), et la troisième largeur d'incision (B10c) prenant, en au moins un sommet (SP) à l'intérieur de la section radialement intérieure (10c), une valeur maximale (BMax) qui est d'au moins 5 mm, de préférence d'au moins 6 mm.

2. Pneu (1) pour véhicule selon la revendication 1,
**caractérisé en ce que**
un angle entre incisions (α) entre des incisions adjacentes (8) du même agencement de lamelles (7)
- est identique pour toutes les incisions (8), notamment, dans le cas de trois incisions (8 ; 8a, 8b, 8c), est respectivement égal à 120°, ou
- est différent pour certaines des incisions (8), notamment, dans le cas de trois incisions (8 ; 8a, 8b, 8c), est compris entre 40° et 160°.

3. Pneu (1) pour véhicule selon la revendication 2,
**caractérisé en ce que**
un premier angle entre incisions (α1) entre une première incision (8a) de l'agencement de lamelles (7) et une deuxième incision (8b) du même agencement de lamelles (7) est compris entre 40° et 60°, et un deuxième angle entre incisions (α2) entre la deuxième incision (8b) et une troisième incision (8c) du même agencement de lamelles (7), ainsi qu'un troisième angle entre incisions (α3) entre la troisième incision (8c) et la première incision (8a), étant chacun compris entre 150° et 160°.

4. Pneu (1) pour véhicule selon l'une des revendications précédentes,
**caractérisé en ce que**
la troisième largeur d'incision (B10c) prend, au niveau d'un fond d'incision (12c3) qui délimite la section radialement intérieure (10c) radialement vers l'intérieur, une valeur de fond (BG) qui est d'au moins 3,5 mm.

5. Pneu (1) pour véhicule selon l'une des revendications précédentes,
**caractérisé en ce que**
la deuxième largeur d'incision (B10b) de la section rétrécie (10b) est sensiblement constante sur la deuxième profondeur d'incision (T10b) et est comprise entre 1 mm et 3 mm.

6. Pneu (1) pour véhicule selon l'une des revendications précédentes,
**caractérisé en ce que**
la section rétrécie (10b) débouche directement dans la section radialement intérieure (10c) dans la direction radiale (R).

7. Pneu (1) pour véhicule selon l'une des revendications précédentes,
**caractérisé en ce que**
l'incision respective (8) présentant, depuis la surface de bande de roulement (2a), une section radialement extérieure (10a) qui débouche directement dans la section rétrécie (10b) dans la direction radiale (R), une première largeur d'incision (B10a) de la section radialement extérieure (10a) au niveau de la surface de bande de roulement (2a) étant comprise, en section transversale, entre 3 mm et 10 mm, notamment entre 6 mm et 8mm, et/ou une première profondeur d'incision (T10a) de la section radialement extérieure (10a) étant comprise entre 2 mm et 5 mm, et
la section radialement extérieure (10a) présentant une forme en entonnoir dans la direction radiale (R).

8. Pneu (1) pour véhicule selon la revendication 7,
**caractérisé en ce que**
la somme de la première profondeur d'incision (T10a) de la section radialement extérieure (10a) et de la deuxième profondeur d'incision (T10b) de la section rétrécie (10b) représente moins de 50 % de la profondeur totale (T8) de l'incision respective (8),
la première profondeur d'incision (T10a) représentant de préférence entre 10 % et 20 % de la profondeur totale (T8) de l'incision respective (8), et la deuxième profondeur d'incision (T10b) représentant de préférence entre 30 % et 40 % de la profondeur totale (T8) de l'incision respective (8).

9. Pneu (1) pour véhicule selon l'une des revendications précédentes,
**caractérisé en ce que**
la troisième largeur d'incision (B10c) prend, au niveau dudit au moins un sommet (SP) à l'intérieur de la section radialement intérieure (10c), une valeur maximale (BMax) qui est d'au plus 10 mm, de préférence d'au plus 9 mm, notamment d'au plus 8 mm.

10. Pneu (1) pour véhicule selon l'une des revendications précédentes,
**caractérisé en ce que**
la profondeur totale (T8) de l'incision respective (8) est comprise entre 10 mm et 25 mm, la profondeur totale (T8) de toutes les incisions (8) d'un agencement de lamelles (7), de préférence de tous les agencements de lamelles (7), étant identique.

11. Pneu (1) pour véhicule selon l'une des revendications précédentes,
**caractérisé en ce que**
la profondeur totale (T8) de l'incision respective (8) est supérieure ou égale à la profondeur de profil (T3) du profil (3).

12. Pneu (1) pour véhicule selon l'une des revendications précédentes,
**caractérisé en ce que**
des agencements de lamelles (7) adjacents sont disposés en étant tournés les uns par rapport aux autres autour de leur ligne centrale (9), notamment des agencements de lamelles (7) adjacents qui sont disposés de manière décalée les uns par rapport aux autres dans la bande de roulement (2) dans la direction transversale (Q).

13. Pneu (1) pour véhicule selon l'une des revendications précédentes,
**caractérisé en ce que**
une longueur (L) de l'incision respective (8) d'un agencement de lamelles (7), à partir de la ligne centrale (9), est comprise entre 5 mm et 25 mm, notamment entre 15 mm et 25 mm.

14. Pneu (1) pour véhicule selon l'une des revendications précédentes,
**caractérisé en ce que**
au moins une incision (8) d'au moins un des agencements de lamelles (7) débouche dans l'une des rainures circonférentielles (4a) du profil (3).
